# EUROPÄISCHE PATENTANMELDUNG

(11) **EP 1 329 742 A2**
(43) Veröffentlichungstag der Anmeldung: **23.07.2003**
(21) Anmeldenummer: 02027215.9
(22) Anmeldetag: 06.12.2002
(51) Int. Cl.: G01V 3/10

(54) **Vorrichtung zur Detektion von Metallgegenständen**

(30) Priorität: 19.01.2002 DE 20200759 U
(71) Anmelder: Maier Fabris GmbH, 72072 Tübingen (DE)
(72) Erfinder: Maier, Hans Jürgen, 72072 Tübingen (DE); Fabris, Hans-Jürgen, 72760 Reutlingen (DE)
(74) Vertreter: Möbus, Daniela, Dr.-Ing.

(57) **Zusammenfassung**

Eine Vorrichtung zur Detektion von Metallgegenständen im Fuß- und Beinbereich von Personen, die eine Ummantelung aus einem elektrisch leitfähigen Material zur Abschirmung von elektromagnetischen Störfeldern und/oder metallischen Störkörpern aufweist.

## Beschreibung

Die Erfindung betrifft eine Vorrichtung zur Detektion von Metallgegenständen im Fuß- und Beinbereich von Personen.

Schon seit längerer Zeit werden aus Sicherheitsgründen auf Flughäfen oder bei Großveranstaltungen wie Fußballspielen oder dergleichen Personen vor dem Betreten des Flugzeugs oder am Eingang des Veranstaltungsgeländes auf metallische Gegenstände wie Schusswaffen oder Messer durchsucht. Beliebte Verstecke für solche Gegenstände sind die Sohlen von Schuhen, die beim Durchschreiten eines mit Metalldetektoren versehenen Türrahmens nicht detektiert werden können. Bei verschärften Sicherheitskontrollen müssen daher Fluggäste ihre Schuhe ausziehen, damit diese geröntgt werden können. Dieses Verfahren ist jedoch für die Beteiligten nicht sehr angenehm und außerdem auch sehr zeitaufwändig. Darüber hinaus können beim Röntgen der Schuhe gegebenenfalls in den Strümpfen versteckte Metallgegenstände nicht detektiert werden.

Es sind daher auch schon Versuche unternommen worden, die bekannten Türrahmen mit Metalldetektoren im Fußbereich mit zusätzlichen Detektoren zur Untersuchung des Fuß- und Beinbereichs zu versehen. Mit den bekannten Einrichtungen konnten bisher jedoch keine zuverlässigen Messergebnisse erzielt werden. Dies liegt insbesondere daran, dass insbesondere bei Flughafengebäuden in Böden und Decken Stahlarmierungen vorhanden sind, durch die elektromagnetische Störfelder in die Metalldetektoren eingekoppelt werden können. Auch die in einem Flughafengebäude betriebenen elektronischen Geräte führen zu elektromagnetischen Stör-feldern der unterschiedlichsten Frequenzen. Insbesondere Metalldetektoren, deren Sondenanordnungen parallel und mit geringem Abstand zu stahlarmierten Flächen verlaufen, wie dies bei Fußdetektoren der Fall ist, werden erheblich gestört bzw. erzeugen ihrerseits elektromagnetische Felder, die sich durch die Armierung ausbreiten und andere Geräte stören können.

Der vorliegenden Erfindung liegt daher die Aufgabe zugrunde, eine Vorrichtung zur zuverlässigen Detektion von Metallgegenständen im Fuß- und Beinbereich von Personen zu schaffen, die die genannten Nachteile vermeidet.

Die Aufgabe wird durch eine Vorrichtung zur Detektion von Metallgegenständen im Fuß- und Beinbereich von Personen gelöst, die dadurch gekennzeichnet ist, dass sie eine Ummantelung aus einem elektrisch leitfähigen Material zur Abschirmung von elektromagnetischen Störfeldern und/oder metallischen Störkörpern aufweist. Die elektrisch leitenden Metallflächen löschen eintretende magnetische Wechselfelder durch gleich große Wirbelstromfelder aus. Die vorhandenen elektrischen Felder werden an der Oberfläche abgeleitet. Dies gilt gleichermaßen sowohl für ungerichtete und unerwünscht austretende elektromagnetische Wechselfelder des Metallsuchgeräts selbst als auch für von außen kommende Störfelder.

Die Zuverlässigkeit der Vorrichtung kann noch dadurch erhöht werden, dass sie mit Differenzspulen ausgestattet ist. Differenzspulen sind durch die Art ihrer Beschaltung in der Lage, die Wirkung homogener Störfelder zu dämpfen. Störfelder wirken dann homogen, wenn sie aus größeren Entfernungen z. B. durch Stahlarmierungen übertragen werden.

Eine weitere Möglichkeit, den Einfluss von Störfeldern zu minimieren, besteht darin, die Vorrichtung mit einer Auswerteeinrichtung für die Messsignale zu versehen, die von Störeinflüssen stammende Messwerte unterdrückt. Dazu kann die Auswerteeinrichtung einen Vergleich der Messsignale mit Referenzsignalen von sicherheitsgefährdenden Metallgegenständen vornehmen.

Durch die genannten Maßnahmen werden gleichzeitig auch störende Einflüsse von Metallteilen außerhalb des Detektionsbereichs beispielsweise durch am Körper getragene Metallteile des Kontrollpersonals deutlich reduziert.

Die erfindungsgemäße Vorrichtung kann alleine oder aber auch in Kombination mit anderen Metalldetektoren für andere Körperbereiche eingesetzt werden. Wird sie gemeinsam mit anderen Metalldetektoren betrieben, so ist es vorteilhaft, sie abwechselnd mit Metalldetektoren nach dem Puls-Induktionsverfahren für die anderen Körperbereiche zu aktivieren. Die wechselseitige Aktivierung der Sendefelder kann beispielsweise durch eine Steuereinrichtung mit Umschaltung der Taktimpulse erfolgen. Dies führt zu einer zeitlichen Entkopplung der Empfängerfenster für die fremden Störfrequenzen, sodass die gegenseitige Beeinflussung der Detektoren reduziert wird.

## Patentansprüche

1. Vorrichtung zur Detektion von Metallgegenständen im Fuß- und Beinbereich von Personen, **dadurch gekennzeichnet, dass** sie eine Ummantelung aus einem elektrisch leitfähigen Material zur Abschirmung von elektromagnetischen Störfeldern und/oder metallischen Störkörpern aufweist.

2. Vorrichtung nach Anspruch 1, **dadurch gekennzeichnet, dass** sie Differenzspulen aufweist.

3. Vorrichtung nach Anspruch 1 oder 2, **dadurch gekennzeichnet, dass** sie eine Auswerteeinrichtung für die Messsignale aufweist, die von Störeinflüssen stammende Messwerte unterdrückt.

4. Vorrichtung nach Anspruch 3, **dadurch gekennzeichnet, dass** die Auswerteeinrichtung einen Vergleich der Messsignale mit Referenzsignalen von sicherheitsgefährdenden Metallgegenständen vornimmt.

5. Vorrichtung nach einem der Ansprüche 1 bis 4, **dadurch gekennzeichnet, dass** sie zusammen mit Metalldetektoren für andere Körperbereiche einsetzbar ist.

6. Vorrichtung nach Anspruch 5, **dadurch gekennzeichnet, dass** sie abwechselnd mit Metalldetektoren nach dem Puls-Induktionsverfahren für die anderen Körperbereiche aktivierbar ist.

7. Vorrichtung nach Anspruch 6, **dadurch gekennzeichnet, dass** die wechselseitige Aktivierung durch eine Steuereinrichtung mit Umschaltung der Taktimpule erfolgt.
